# EUROPÄISCHE PATENTANMELDUNG

(11) **EP 0 744 746 A2**
(43) Veröffentlichungstag der Anmeldung: **27.11.1996**
(21) Anmeldenummer: 96106245.2
(22) Anmeldetag: 20.04.1996
(51) Int. Cl.: G11B 33/04

(54) **Blechbehälter für eine CD-Platte oder dgl.**

(30) Priorität: 23.05.1995 DE 29508511 U
(71) Anmelder: Rasselstein Hoesch GmbH, 56562 Neuwied (DE)
(72) Erfinder: Veeser, Elmar, 56645 Nickenich (DE); Ehrenbrand, Werner, 90513 Zirndorf (DE)
(74) Vertreter: Liebau, Gerhard, Dipl.-Ing.

(57) **Zusammenfassung**

Der Blechbehälter (1) für eine CD-Platte (7) oder dgl. besteht aus einem Unterteil (3), einem Deckelteil (2) mit nach untem gerichteten Rand, welcher den Rand des Unterteiles (3) umfaßt. Der Rand des Unterteils (3) erstreckt sich von dessen Boden (4) weg nach unten und weist an seinem unteren, vom Boden (4) entfernten Bereich eine nach außen vorstehende Einrollung auf. Der Aufnahmekörper (5) ist aus Blech geformt und weist ein zentrales, im wesentlichen zylindrisches, in die Zentrieröffnung (8) der CD (7) klemmend eingreifendes Halteteil (6) auf. Das Halteteil (6) ist von einem gegenüber dem übrigen Bereich des Bodens erhöhten Stützteil (10) konzentrisch umgeben.

## Beschreibung

Die Erfindung betrifft einen Blechbehälter für eine CD-Platte oder dgl. mit einem Unterteil, das einen Aufnahmekörper für die CD oder einen ähnlichen, scheibenförmigen, eine Zentrieröffnung aufweisenden Datenträger enthält, und mit einem Deckelteil mit einem nach unten gerichteten Rand, welcher den Rand des Unterteils umfaßt.

Bei einem bekannten Blechbehälter dieser Art weist das Unterteil einen Rand auf, der sich vom Boden des Unterteils nach oben zum Deckelteil hin erstreckt. Das Unterteil bildet so eine flache Schale, in welcher der aus Schaumstoff bestehende Aufnahmekörper, der eine Vertiefung zur Aufnahme der CD aufweist, angeordnet ist. Da die CD unmittelbar auf dem Schaumstoffkörper aufliegt, kann sie verkratzt werden, sobald Staub oder sonstige Fremdkörper auf den Schaumstoff gelangen. Da ferner bei dem bekannten Behälter die CD in einer Vertiefung des Aufnahmekörpers und des Unterteiles angeordnet ist, ist die Entnahme der CD erschwert. Außerdem kann sich die CD in der Vertiefung bewegen und ist nicht sicher gehalten. Schließlich ist auch die Wiederverwertung des bekannten Blechbehälters problematisch, weil der Schaumstoff-Aufnahmekörper in das Unterteil eingeklebt ist. Der bekannte Behälter besteht aus zwei unterschiedlichen Materialien und der Schaumstoffaufnahmekörper müßte erst aus dem Unterteil entfernt werden, bevor man dieses recyceln kann.

Die heute gebräuchlichsten Behälter für CDs bestehen aus durchsichtigem Kunststoff. Im Unterteil des Behälters ist ein ebenfalls aus Kunststoff bestehender Aufnahmekörper für die CD angeordnet. Dieser Aufnahmekörper weist in seiner Mitte einen druckknopfartigen Vorsprung auf, der durch mehrere Schlitze in federnde Zungen unterteilt ist. Diese federnden Zungen greifen in die Zentrieröffnung mit verhältnismäßig großer Spannung ein. Bei der ersten Benutzung der CD ist daher eine hohe Losreißkraft erforderlich, die zum Brechen der CD führen kann. Außerdem erlahmen die aus Kunststoff bestehenden Federzungen nach längerer Zeit, so daß die CD nicht mehr sicher gehalten wird. Infolge von Alterung des Kunststoffes können nach längerer Zeit oder bei öfterer Entnahme der CD die Federzungen ausbrechen. Auch das Recyceln der Kunststoffbehälter ist problematisch, weil der durchsichtige Behälter meist aus einem anderen Kunststoff besteht als der Aufnahmekörper, und beide Kunststoffe nicht miteinander vermischt werden dürfen.

Der Erfindung liegt daher die Aufgabe zugrunde, einen Blechbehälter für eine CD-Platte oder dgl. der eingangs erwähnten Art zu schaffen, in welchem die CD sicher und ohne die Gefahr einer Beschädigung gehalten ist, aus dem die CD trotzdem leicht entnehmbar ist und der vollständig aus Blech besteht, so daß er in einfacher Weise zu recyceln ist.

Dies wird nach der Erfindung dadurch erreicht, daß sich der Rand des Unterteils von dessen Boden bzw. dem Deckelteil weg nach unten erstreckt und an seinem unteren, vom Boden entfernten Bereich eine nach außen vorstehende Einrollung (Bördel) aufweist, und daß der Aufnahmekörper aus Blech geformt ist und ein zentrales, im wesentlichen zylindrisches, in die Zentrieröffnung der CD klemmend eingreifendes Halteteil aufweist, dessen Durchmesser geringfügig größer ist als der Durchmesser der Zentrieröffnung, und das von einem gegenüber dem übrigen Bereich des Bodens erhöhten Stützteil konzentrisch umgeben ist, auf dem sich der die Zentrieröffnung umgebende, zentrale Teil der CD abstützt.

Bei dem neuen Blechbehälter liegt nach Abnahme des Deckelteils der gesamte Rand der CD frei und befindet sich außerdem in einem Abstand vom Boden des Unterteils. Die CD kann infolgedessen leicht vom Unterteil entnommen und auch wieder auf dieses gesetzt werden. Da Metallblech gegenüber dem Kunststoff, aus dem die CDs bestehen, einen geringeren Reibwert hat als Kunststoff, aus dem bei Kunststoffverpackungen bisher die Aufnahmekörper gefertigt sind, entsteht beim ersten Benutzen der CD nur eine geringe Losreißkraft, die nicht zum Brechen der CD führen kann. Trotzdem ist die vom Halteteil ausgeübte Klemmkraft ausreichend, um die CD sicher zu halten. Da der die Daten tragende Teil der CD in Abstand vom Boden des Unterteils gehalten wird, werden Beschädigungen der CD vermieden. Außerdem ist die CD auch leichter entnehmbar. Da der gesamte Blechbehälter einschließlich des Aufnahmekörpers aus Blech besteht, kann er leicht recycelt werden.

Vorteilhafte Ausgestaltungen der Erfindung sind in den Unteransprüchen gekennzeichnet.

Die Erfindung ist in folgendem, anhand von in der Zeichnung dargestellten Ausführungsbeispielen näher erläutert. Es zeigen:
- Figur 1: einen Querschnitt des gesamten Blechbehälters in einer ersten Ausführungsform mit der darin angeordneten CD, etwa im Maßstab 2 : 1,
- Figur 2: einen Querschnitt des Unterteils in einer zweiten Ausführungsform,
- Figur 3: eine teilweise Seitenansicht des Blechbehälters im Bereich einer Ecke, etwa im Maßstab 5 : 1,
- Figur 4: eine Draufsicht auf den Blechbehälter etwa im Maßstab 1 : 1,
- Figur 5: einen Querschnitt nach der Linie V-V der Figur 4, etwa im Maßstab 5 : 1,
- Figur 6: einen Querschnitt nach der Linie VI-VI der Figur 4 im gleichen Maßstab.

Der Blechbehälter 1 besteht aus einem Deckelteil 2 und einem Unterteil 3. Deckelteil 2 und Unterteil 3 weisen einen im wesentlichen rechteckigen Grundriß auf, dessen Länge und Breite den üblichen Abmessungen von CD-Verpackungen entspricht. Deckelteil 2 und Unterteil 3 bestehen aus Stahlblech, insbesondere Weißblech. Gegebenenfalls kann jedoch auch ein anderes Material, wie z.B. Aluminiumblech, verwendet werden.

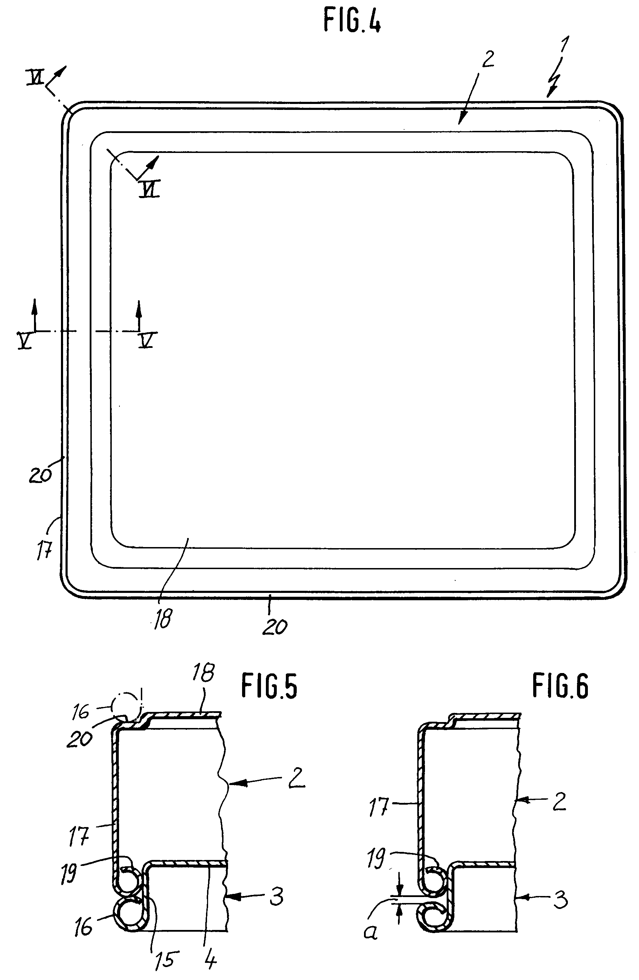

Der Behälter 1 weist auch insbesondere bezüglich der Ausgestaltung des Unterteiles 3 besondere neue Merkmale und sich hieraus ergebende Vorteile auf. Wie man aus Figur 5 und 6 erkennen kann, erstreckt sich der Rand 15 des Unterteiles 3 vom Boden 4 weg nach unten, d.h. er ist vom Deckelteil 2 weggerichtet. An seinem unteren, vom Boden entfernten Bereich, weist der Rand 15 eine nach außen vorstehende Einrollung 16, die auch als Bördel bezeichnet werden kann, auf. Diese Einrollung 16 verleiht dem Unterteil 3 besondere Steifigkeit und sie begrenzt außerdem die Bewegung des Deckelteiles 2 gegenüber dem Unterteil 3. Der Rand 17 des Deckelteiles 2 ist an seinem unteren, vom Deckelfeld 18 entfernten Bereich mit einer nach innen vorstehenden Einrollung (Bördel)19 versehen. Auch diese Einrollung 19 dient zur Versteifung des Deckelteiles 2 und sie kommt beim Aufsetzen des Deckelteiles 2 auf das Unterteil 3 in Anlage an der Einrollung 19 des Randes 15. Die Einrollung 19 umfaßt den Rand 15 des Unterteiles 3 und liegt an diesem klemmend an.

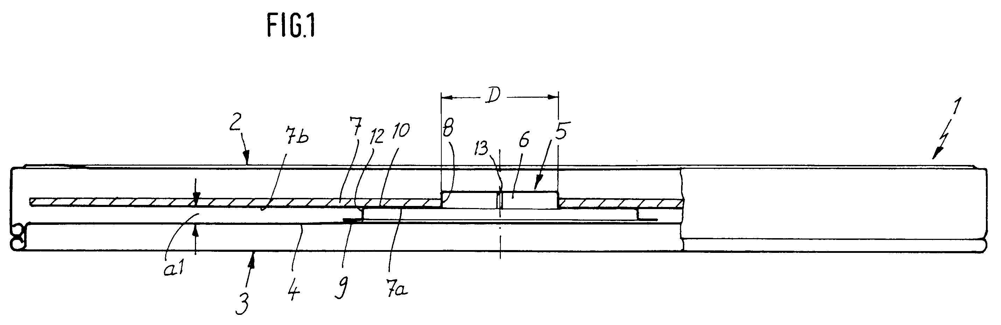

Das Unterteil 3 weist bei dem in Figur 1 dargestellten Ausführungsbeispiel in der Mitte seines Bodens 4 einen separaten Aufnahmekörper 5 auf, der ebenfalls aus Blech, vorzugsweise verzinntem Feinstblech (Weißblech), oder verchromtem Feinstblech besteht. Der Aufnahmekörper kann durch Tiefziehen hergestellt werden.

Der Aufnahmekörper 5 weist als Halteteil einen zentralen, zylindrischen Zapfen 6 auf, dessen Durchmesser D etwa 15,1 mm beträgt, und damit um ca. 0,1 mm größer ist als die bei CDs üblicherweise vorhandene Zentrieröffnung.
In Figur 1 ist die CD mit dem Bezugszeichen 7 und ihre Zentrieröffnung mit dem Bezugszeichen 8 bezeichnet.
Der Zapfen 6 kann zur Erhöhung seiner Elastizität mit mehreren, radial verlaufenden Schlitzen 13 versehen sein. Der Zapfen 6 ist von einem Stützteil 10 konzentrisch umgeben, das sich an das untere Ende der zylindrischen Seitenwand des Zapfens 6 anschließt.

Am äußeren Umfang des Stützteiles 10 ist ein Stufenabschnitt 12 vorgesehen. Ferner ist ein Befestigungsflansch 9 vorgesehen, der zur Verbindung des Aufnahmekörpers 5 mit dem Boden 4 dient. Durch den Stufenabschnitt 12 ist das Stützteil 10 gegenüber dem übrigen Boden 4 erhöht, so daß zwischen dem mit Daten versehenen Teil 7b der CD ein Abstand a vorhanden ist und dort ein Zerkratzen der CD vermieden wird.

Die Verbindung des Befestigungsflansches 9 mit dem Boden 4 des Unterteils 3 kann auf verschiedene Art, so z.B. durch Kleben, erfolgen. Vorzuziehen ist jedoch Heiß-Siegeln. Hierzu wird zur Herstellung des Aufnahmekörpers Stahlblech verwendet, welches bereits vor dem Tiefziehen mit einem siegelfähigen Lack, oder einer Beschichtung aus Polypropylen (PP) bzw. Polyethylenterephtalat (PET) versehen ist. Die Dicke des Lackes kann zwischen 1 und 10 µm, die des Kunststoffmaterials 10 bis 50 µm, betragen. Das Unterteil 3 kann entweder aus unbeschichtetem Blech bestehen oder es kann die gleichen Beschichtungen wie der Aufnahmekörper 5 aufweisen.

Die spezielle Ausgestaltung des Unterteiles 3 hat den wesentlichen Vorteil, daß der äußere Umfang der CD 7 nach dem Abnehmen des Deckelsteils 2 allseitig frei liegt und daher leicht erfaßt werden kann. Umgekehrt kann die CD 7 auch wieder auf das Halteteil 6 aufgesetzt werden, ohne daß hierbei die Gefahr besteht, daß ihre empfindliche Unterseite mit Teilen des Unterteils 3 in Berührung kommt.

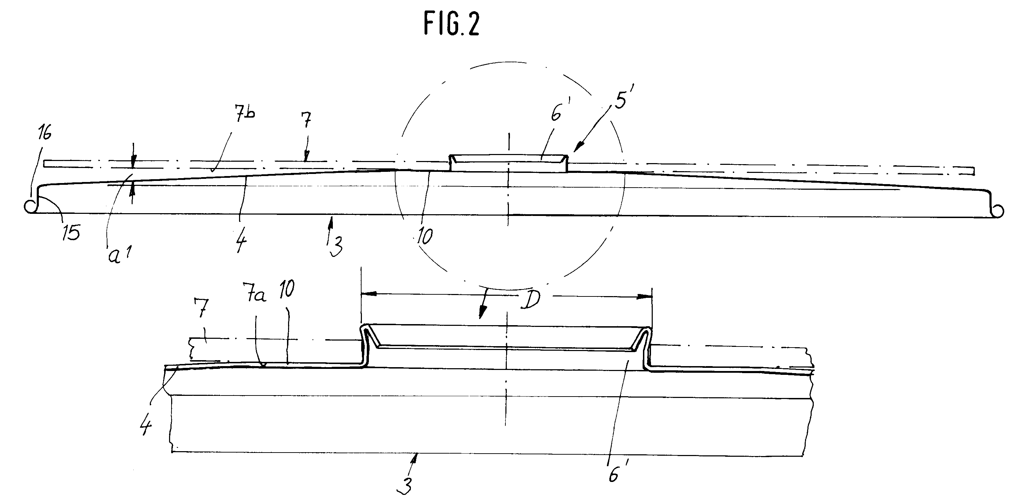

Bei dem in Figur 2 dargestellten Ausführungsbeispiel besteht der Haltekörper 5' mit dem Unterteil 3 aus einem Stück. Das Halteteil 6' ist in diesem Fall ein aus dem Boden 4 gezogener, im wesentlichen zylindrischer Kragen. Dieser Kragen ist zweckmäßig, wie es aus der stark vergrößerten Darstellung, Figur 2, unten, ersichtlich ist, an seinem nach oben gerichteten, freien Ende radial nach innen umgeschlagen. An seinem freien Ende ist der Kragen 6' außerdem leicht nach außen verformt, um einen Durchmesser D zu schaffen, der geringfügig größer ist als der Durchmesser der Zentrieröffnung 8 der CD, um hierdurch die Klemm- und Haltefunktion für die CD sicherzustellen. Wie bei dem vorher beschriebenen Ausführungsbeispiel ist das Halteteil oder der Kragen 6' von einem Stützteil 10 konzentrisch umgeben, welches gegenüber dem umgebenden Bereich des Bodens 4 erhaben ist. Der Boden 4 ist domförmig nach oben ausgewölbt und fällt zum Rand 15 des Unterteils 3 hin ab. Hierdurch wird, wie bei dem vorhergehenden Ausführungsbeispiel, erreicht, daß sich die CD nur mit ihrem die Zentrieröffnung 8 umgebenden zentralen Teil 7a auf dem Stützteil 7 abstützt. Der übrige Bereich 7b der CD, welcher die Daten trägt, berührt den nach oben ausgewölbten Boden 4 nicht. Dort ist überall ein Abstand a1 vorhanden, der nach außen hin zunimmt. Auch bei dieser Ausführungsform liegt der äußere Umfang der CD 7 nach dem Abnehmen des Deckelteils 2 allseitig frei und kann leicht erfaßt werden.

Um das Öffnen des Blechbehälters zu erleichtern, ist die Einrollung 16 des Unterteils im Bereich mindestens einer Ecke an ihrer dem Deckelteil 2 zugekehrten Seite in der Höhe verkleinert, was beispielsweise durch Stauchen erfolgen kann. Dies ist in Figur 6 dargestellt. Das Stauchen der Einrollung 16 erfolgt um etwa 0,5 mm, so daß bei geschlossenem Behälter im Eckbereich ein entsprechender Abstand a zwischen den beiden Einrollungen 16, 19 vorhanden ist. Drückt man auf die entsprechende Ecke des Deckelteils, dann hebt sich die diagonal gegenüberliegende Ecke des Deckelteils an und führt zum Öffnen. Gegebenenfalls wäre es auch denkbar, entsprechende Ausgestaltungen an allen vier Ecken vorzunehmen, so daß man beim Öffnen des Behälters nicht aufpassen muß, auf welche Ecke des Deckelteils man zu drücken hat.

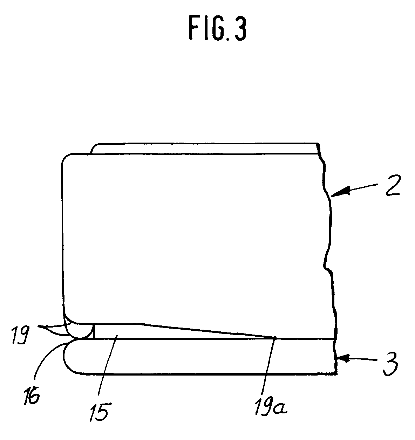

Um das Öffnen des Blechbehälters zu erleichtern, kann man auch die Einrollung des Deckelteils 2 im Bereich mindestens einer Ecke an ihrer dem Deckelunterteil 3 zugekehrten Seite in ihrer Höhe verkleinern, wie es in einer teilweisen Seitenansicht in Figur 3 dargestellt ist. Auch dies kann durch Stauchen erfolgen. Durch Drücken auf diese Ecke wird das Deckelteil 2 über den Drehpunkt 19a vom Unterteil 4 abgehebelt, wobei die Öffnung des Behälters an der diagonal gegenüberliegenden Ecke beginnt.

Wie man insbesondere aus Figur 5 erkennen kann, ist das Deckelteil 2 an seiner Oberseite am Übergang zwischen seinem Rand 17 und dem Deckelfeld 18 mit einer umlaufenden Stufe 20 versehen. Diese Stufe 20 dient zum Eingriff der Einrollung 16 des Unterteils 3 eines darauf gestapelten Behälters 1, wie es in Figur 5 strichpunktiert dargestellt ist. Auf diese Weise können beliebig viele Behälter übereinander gestapelt werden, ohne gegeneinander zu verrutschen.

Das Halteteil 6 bzw. der zylindrische Kragen 6' können gegebenenfalls auch so lang ausgebildet sein, daß zwei oder drei CD's koaxial übereinander auf dem Halteteil 6 bzw. Kragen 6' angeordnet und von diesem gehalten werden können.

## Patentansprüche

1. Blechbehälter für eine CD-Platte oder dgl. mit einem Unterteil, das einen Aufnahmekörper für die CD oder einen ähnlichen, scheibenförmigen, eine Zentrieröffnung aufweisenden Datenträger enthält, und mit einem Deckelteil mit nach unten gerichtetem Rand, welcher den Rand des Unterteiles umfaßt, **dadurch gekennzeichnet,** daß sich der Rand (15) des Unterteils (3) von dessen Boden (4) bzw. dem Deckelteil (2) weg nach unten erstreckt und an seinem unteren, vom Boden (4) entfernten Bereich eine nach außen vorstehende Einrollung (Bördel) (16) aufweist, und daß der Aufnahmekörper (5) aus Blech geformt ist und ein zentrales, im wesentlichen zylindrisches, in die Zentrieröffnung (8) der CD (7) klemmend eingreifendes Halteteil (6) aufweist, dessen Durchmesser (D) geringfügig größer ist als der Durchmesser der Zentrieröffnung (8) und das von einem gegenüber dem übrigen Bereich des Bodens erhöhten Stützteil (10) konzentrisch umgehen ist, auf dem sich der die Zentrieröffnung (8) umgebende, zentrale Teil (7a) der CD (7) abstützt.

2. Blechbehälter nach Anspruch 1, **dadurch gekennzeichnet,** daß der Rand (17) des Deckelteiles (2) an seinem unteren, vom Deckelfeld (18) entfernten Bereich eine nach innen vorstehende Einrollung (Bördel) (19) aufweist, welche den Rand (15) des Unterteiles (3) umfaßt und an dem Rand (15) klemmend anliegt.

3. Blechbehälter nach Anspruch 1 oder 2, **dadurch gekennzeichnet,** daß das Deckelteil (2) und das Unterteil (3) einen im wesentlichen rechteckigen Grundriß mit abgerundeten Ecken aufweisen.

4. Blechbehälter nach Anspruch 2 oder 3, **dadurch gekennzeichnet,** daß die Einrollung (16) des Unterteiles (3) im Bereich mindestens einer Ecke an ihrer dem Deckelteil (2) zugekehrten Seite in ihrer Höhe verkleinert ist, so daß bei geschlossenem Behälter (1) im Eckbereich ein Abstand (a) zwischen den beiden Einrollungen (16, 19) von Deckelteil (2) und Unterteil (3) vorhanden ist.

5. Blechbehälter nach Anspruch 2 oder 3, **dadurch gekennzeichnet,** daß die Einrollung (19) des Deckelteiles (2) im Bereich mindestens einer Ecke an ihrer dem Unterteil (3) zugekehrten Seite in ihrer Höhe verkleinert ist, so daß bei geschlossenem Behälter (1) im Eckbereich ein Abstand (a) zwischen den beiden Einrollungen (16, 19) von Deckelteil (2) und Unterteil (3) vorhanden ist.

6. Blechbehälter nach einem der Ansprüche 1 - 5, **dadurch gekennzeichnet,** daß das zylindrische Halteteil (6) und das konzentrische Stützteil (10) aus dem Boden des Unterteils ausgeformt sind.

7. Blechbehälter nach Anspruch 6, **dadurch gekennzeichnet,** daß das Halteteil (6) durch einen aus dem Boden gezogenen, im wesentlichen zylindrischen Kragen (6') gebildet ist.

8. Blechbehälter nach Anspruch 7, **dadurch gekennzeichnet,** daß der Kragen (6') an seinem nach oben gerichteten, freien Ende radial nach innen umgeschlagen ist.

9. Blechbehälter nach Anspruch 8, **dadurch gekennzeichnet,** daß der Kragen (6') an seinem oberen freien Ende etwas im Durchmesser vergrößert ist, um hierdurch die Klemmund Haltefunktion für die CD sicherzustellen.

10. Blechhehälter nach Anspruch 6 oder 7, dadurch gekennzeichnet, daß der das konzentrische Stützteil (10) umgebende, übrige Bereich des Bodens (4) domförmig nach oben ausgewölbt ist und zum Rand des Unterteiles hin abfällt.

11. Blechbehälter nach einem der Ansprüche 1 - 10, **dadurch gekennzeichnet,** daß das Deckelteil an seiner Oberseite am Übergang zwischen seinem Rand (17) und dem Deckelfeld (18) eine umlaufende Stufe (20) zum Eingriff der Einrollung (16) des Unterteils (3) eines darauf gestapelten Behälters (1) aufweist.
